(19) Europäisches Patentamt
European Patent Office
Office européen des brevets

(11) **EP 0 899 977 A1**

(12) **DEMANDE DE BREVET EUROPEEN**

(43) Date de publication:
**03.03.1999 Bulletin 1999/09**

(51) Int. Cl.$^6$: **H04Q 7/32**

(21) Numéro de dépôt: **98202830.0**

(22) Date de dépôt: **24.08.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **27.08.1997 FR 9710690**

(71) Demandeur:
**Koninklijke Philips Electronics N.V.**
**5621 BA  Eindhoven (NL)**

(72) Inventeur: **Coutant, François**
**75008 Paris (FR)**

(74) Mandataire: **Chaffraix, Jean**
**Société Civile S.P.I.D.**
**156, Boulevard Haussmann**
**75008 Paris (FR)**

(54) **Système de transmission radio avec plusiers mobiles, comportant des listes de réseaux, procédé pour mettre à jour une telle liste et station mobile correspondante**

(57)    Ce système comporte une station de base (B1) et différents mobiles (M1,M2,etc...). Au moins l'un des mobiles peut aussi se connecter à un autre système comportant une station de base (B2). Ce mobile comporte une liste de tous les systèmes auprès desquels il peut se connecter. D'une manière avantageuse, cette liste peut être mise à jour automatiquement.

FIG. 1

EP 0 899 977 A1

## Description

L'invention concerne un système de transmission radioélectrique, constituant un réseau de télécommunications, auquel est rattaché au moins un mobile de télécommunications pour un abonné appelé à se déplacer dans des zones de couvertures appartenant audit réseau de rattachement et dans des zones appartenant à d'autres réseaux, mobile comportant :

- des moyens de mémorisation pour mémoriser des noms de réseaux et des indices de qualité affectés à chacun desdits réseaux.

L'invention concerne aussi un procédé pour établir une liste de réseaux et aussi un mobile dans lequel le procédé est mis en oeuvre.

La possibilité de se raccorder sur un autre réseau que celui auprès duquel on a souscrit un abonnement est connue, selon la nomenclature G.S.M., sous le nom de "roaming". On pourra à ce sujet consulter notamment l'ouvrage : "The GSM System for Mobile Communication" de Michel MOULY et Marie-Bernadette PAUTET publié par les auteurs dont l'adresse est 4 rue Elysée Reclus - F-91120 FRANCE.

Un système de ce genre est décrit dans la demande de brevet déposée en France le 16 octobre 1996 sous le numéro 96 12629 au nom de la société Philips Electronics N.V. Dans ce système, l'indice de qualité affecté à chacun des réseaux est le temps pendant lequel le mobile était susceptible de pouvoir se raccorder sur le réseau en question.

Le problème qui se pose alors est de choisir le réseau sur lequel on veut se connecter. L'utilisateur peut être mis à contribution pour choisir son réseau compte tenu de son indice de qualité. Dans la demande de brevet en question on suggérait d'établir une liste de ces réseaux sur lesquels on pouvait se connecter. Cependant un problème demeure, qui est celui de la mise à jour de ladite liste.

La présente invention propose un système du genre mentionné dans le préambule qui procure à l'utilisateur une liste mise à jour en fonction de son désir.

Pour cela, un tel système est remarquable en ce qu'il est prévu :

- des moyens pour mettre à jour automatiquement ladite liste en tenant compte des indices de qualité.

Une caractéristique importante de l'invention selon laquelle l'indice de qualité est la durée durant laquelle le mobile pourrait se rattacher audit réseau auquel est affecté cet indice, procure une grande fiabilité pour un choix judicieux du réseau sur lequel l'abonné peut se rattacher. Ce choix, basé sur cette durée, est de meilleure qualité qu'un choix basé sur le niveau reçu comme sela se fait communément.

Ainsi, grâce à l'invention, pour lui permettre de choisir un réseau avec lequel il peut trafiquer, l'utilisateur dispose d'une liste qui peut être mise à jour automatiquement avec de bons critères de choix.

La description suivante, faite en regard des dessins ci-annexés, le tout donné à titre d'exemple non limitatif, fera bien comprendre comment l'invention peut être réalisée.

La figure 1 montre un système conforme à l'invention.
La figure 2 montre un mobile de télécommunication conforme à l'invention.
La figure 3 montre la structure du montage électrique compris dans ledit mobile.
La figure 4 montre l'organigramme de mise à jour de la liste conformément à l'invention.
La figure 5 montre une variante d'un organigramme pour la mise à jour de la liste.

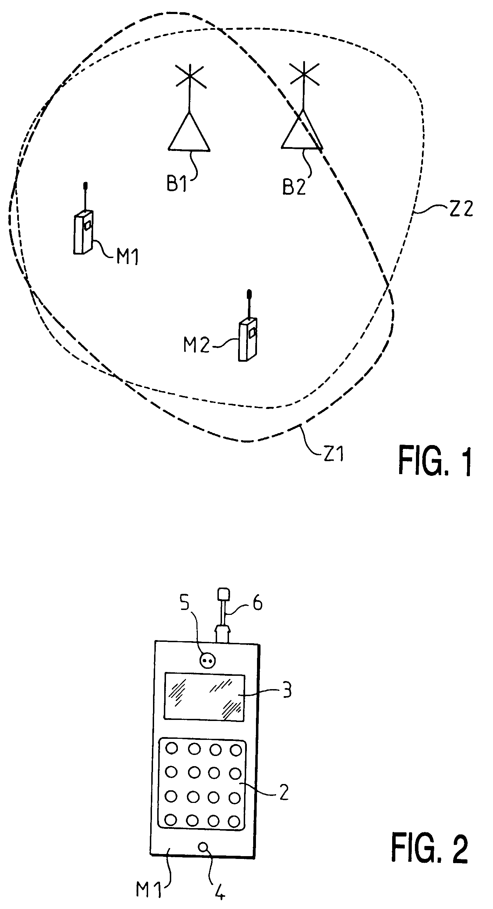

A la figure 1, on a représenté schématiquement un premier système (ou réseau) de transmission de type GSM. On rappelle que ce système est un système cellulaire qui implique une couverture formée de cellules. Chaque cellule a un plan de fréquences ou un canal de fréquence qui se répète toutes les sept cellules pour des cellules de forme hexagonale. Sur la figure 1, le système représenté est formé notamment d'une station de base B1 servant d'intermédiaire pour toutes communications dans lesquelles au moins l'une de deux stations mobiles est concernée : M1 ou M2. Ces stations mobiles M1 et M2 sont situées dans la zone de couverture Z1 de la station de base B1. Cette zone est délimitée sur la figure 1 par un trait en pointillé Z1. Comme cela arrive souvent en pratique, les mobiles peuvent se trouver dans des zones de couvertures appartenant à des réseaux pour lesquels ils n'ont pas pris d'abonnement. Par exemple, comme cela est montré sur la figure, les mobiles M1 et M2 sont aussi situés dans la zone de couverture Z2 d'une autre station de base B2 d'un réseau différent de celui de la station B1 et qui pourrait aussi donner satisfaction à l'utilisateur.

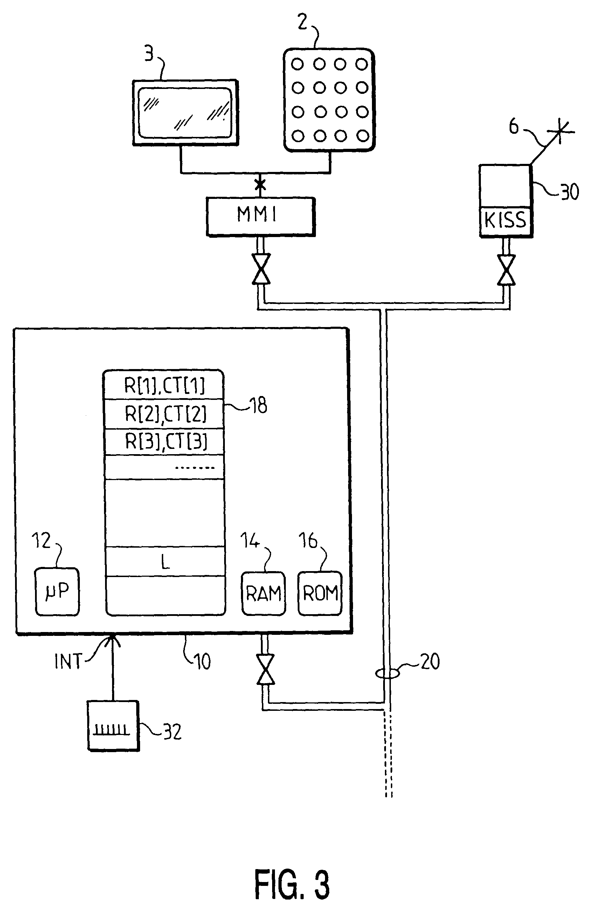

A la figure 2, on a représenté la station mobile M1 conforme à l'invention. Elle comporte, comme à l'accoutumée, un clavier 2, un écran 3, un microphone 4, un écouteur 5 et une antenne 6. Cette station fonctionne à l'aide d'un montage électrique qui est montré à la figure 3.

Cette figure 3 montre la structure du montage électrique de la station mobile M1. Ce montage est constitué par un ensemble à microprocesseur 10 constitué par un microprocesseur proprement dit 12, par une mémoire vive RAM 14, par une mémoire morte ROM 16 et par une mémoire de type EEPROM 18 qui permet de stocker et de conserver des données, même le poste éteint. Les données traitées ou à traiter par cet ensemble 10 transitent par une ligne commune de données 20 qui est connectée au clavier 2 et à l'écran 3 par l'intermédiaire d'un circuit d'interface homme-machine MMI et qui est connectée aussi, entre autres, au circuit émetteur-récepteur 30 par l'intermédiaire d'un circuit d'interface de commande radio KISS. Comme décrit dans la demande de brevet précitée, il est prévu dans la mémoire 18, un tableau contenant des emplacements CT[1], CT[2], CT[3],... qui sont utilisés pour fournir des indications, sur la durée pendant laquelle on aurait pu se connecter respectivement sur un réseau R[1], R[2], R[3],... autre que celui pour lequel l'utilisateur est abonné. Ces mémoires CT[1], CT[2], CT[3],..., lorsque cela est autorisé, sont incrémentées au rythme d'une horloge 32 qui fournit des signaux sur une entrée d'interruption INT, de sorte qu'un programme d'interruption est exécuté pour les incrémenter ou non.

Conformément à l'invention, à partir du tableau comportant le nom des réseaux avec l'indication de la durée en question on établit une liste qui est disposée à l'emplacement L de la mémoire.

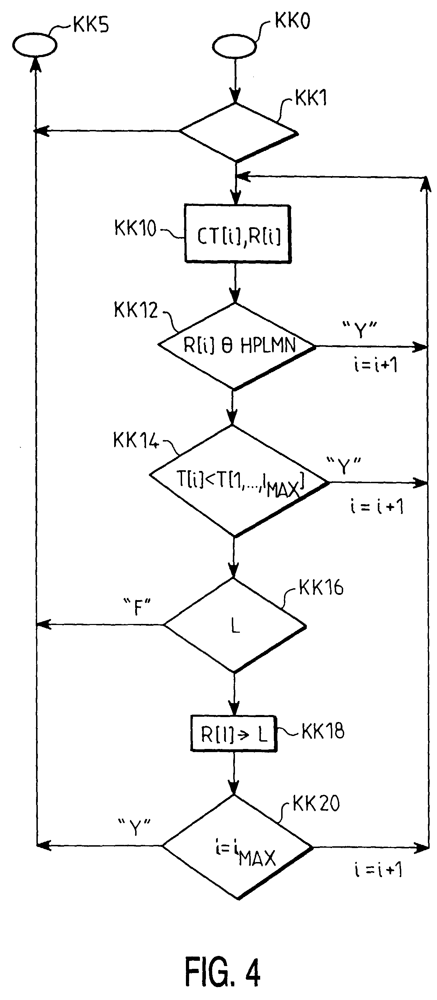

La figure 4 montre l'organigramme de fonctionnement de la station mobile, conformément à l'invention. Cet organigramme comporte une case KK0 qui indique l'entrée du programme. On demande alors à l'utilisateur s'il veut déclencher le processus de mise à jour de sa liste (case KK1). Si l'utilisateur refuse, alors on passe à la case KK5 qui est la sortie du programme de mise à jour de la Piste. S'il veut cette mise à jour, on passe à la case KK10. Cette case KK10 représente le tableau contenant tous les réseaux R[i] que l'on a contactés avec en regard la durée CT[i] cumulée de ce contact. Cette durée est donnée par le contenu des compteurs précités. Ce tableau présente un classement en fonction de la durée du contenu de ces différents compteurs CT[i]. Ce tableau va être examiné selon l'ordre décroissant de ces durées. On examine dans cet ordre chacun des réseaux enregistrés dans ce tableau.

La première chose que l'on examine (case KK12), est de savoir si le réseau est celui auprès duquel on a pris un abonnement. Si c'est oui aucune mesure n'est prise et on va examiner le réseau suivant. Sinon, on va à la case KK14. A cette case, on examine le contenu du compteur pour savoir si ce temps est le plus faible de tous les réseaux appartenant au même pays que lui. Si oui, alors on retourne à la case KK10 pour examiner le réseau suivant. Si le test de la case KK14 indique un temps convenable, le réseau est alors candidat pour faire partie de la liste, à condition que celle-ci dispose de place pour l'y insérer. Ceci est illustré à la case KK16. Si la liste dispose de place, alors le nom du réseau est inséré dans la liste (case KK18). Puis enfin, on teste à la case KK20 si tous les réseaux ont été examinés ($i = i_{MAX}$). Sinon, on retourne à la case KK10 pour traiter le réseau suivant. Si tous les réseaux ont été examinés, alors la mise à jour est considérée comme finie et l'on sort de ce programme de mise à jour (case KK5).

Différentes options peuvent être envisagées pour éliminer des noms de réseaux sur la liste :

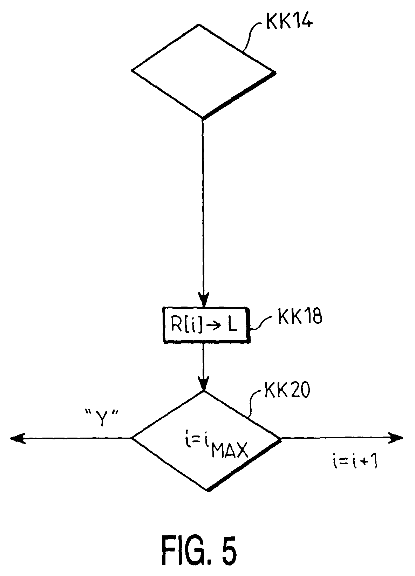

- soit automatiquement, lorsqu'on veut insérer un nouveau nom, il vient en remplacer un dans la liste comme cela est montré à la figure 5. On passe directement de la case KK14 à la case KK18.
- soit "manuellement" en validant des rubriques sur un menu qui apparait sur l'écran. Ainsi, on peut visualiser les différents réseaux, puis les supprimer, les déplacer, et.... Ceci fait partie des choses habituelles dans ce genre d'appareil.

En variante encore, la mise à jour peut être déclenchée chaque fois que le mobile est mis en route. Ceci peut être réalisé en mettant un drapeau sur une option de menu qui signale que la mise à jour se fera ou non à la mise sous tension.

## Revendications

1. Système de transmission radioélectrique, constituant un réseau de télécommunications, auquel est rattaché au moins un mobile de télécommunications pour un abonné appelé à se déplacer dans des zones de couvertures appartenant audit réseau de rattachement et dans des zones appartenant à d'autres réseaux, mobile comportant :

   - des moyens de mémorisation pour mémoriser des noms de réseaux et des indices de qualité affectés à chacun desdits réseaux,

   système caractérisé en ce qu'il comporte, en outre :

   - des moyens pour mettre à jour automatiquement ladite liste en tenant compte des indices de qualité.

2. Système selon la revendication 1, caractérisé en ce que la mise à jour automatique est déclenchée par l'utilisateur,

3. Système selon l'une des revendications 1 à 2, caractérisé en ce que l'indice de qualité est la durée durant laquelle le mobile pourrait se rattacher audit réseau auquel est affecté cet indice.

4. Procédé mis en oeuvre dans un mobile de télécommunications rattaché à un système selon la revendication 1 à 3, caractérisé en ce qu'il comporte les étapes suivantes :

   - établissement d'une table contenant les réseaux détectés avec l'indice de qualité qui leur est rattaché,
   - détection d'une demande de mise à jour de la liste, après détection de l'ordre de ladite demande de mise à jour, pour tous les réseaux de la liste :
   - examen de l'indice de qualité,

-   insertion du réseau dans la liste pour une qualité suffisante.

5.  Procédé selon la revendication 4 caractérisé en ce qu'il comporte les étapes supplémentaires après détection de l'ordre de la mise à jour de ladite liste :

    -   examen du réseau suivant, si le réseau examiné appartient au réseau auprès duquel l'utilisateur est abonné.

6.  Procédé selon la revendication 4 ou 5, caractérisé en ce qu'il comporte les étapes supplémentaires après détection de l'ordre de la mise à jour de ladite liste :

    -   rejet d'un réseau présentant un indice de qualité satisfaisant si ladite liste est pleine.

7.  Mobile dans lequel le procédé selon l'une des revendications 4 à 6 est mis en oeuvre, caractérisé en ce qu'il comporte :

    -   des moyens de connexion sur un autre système,
    -   des premiers moyens de mémorisation pour contenir une table de différents réseaux avec des indices de qualité rattachés à chacun d'entre eux,
    -   des seconds moyens de mémorisation pour contenir une liste de réseaux préférés,
    -   des moyens de mise à jour de ladite liste en fonction de l'indice de qualité.

FIG. 1

FIG. 2

FIG. 3

KK5

KK0

KK1

KK10 — CT[i],R[i]

KK12 — R[i] θ HPLMN → "Y"  $i = i+1$

KK14 — $T[i] < T[1,...,I_{MAX}]$ → "Y"  $i = i+1$

KK16 — L  "F"

KK18 — R[I] → L

KK20 — $i = i_{MAX}$  "Y"  $i = i+1$

# FIG. 4

KK14

$R[i] \rightarrow L$  KK18

KK20

"Y"

$i = i_{MAX}$

$i = i+1$

## FIG. 5

Office européen
des brevets

**RAPPORT DE RECHERCHE EUROPEENNE**

Numéro de la demande

EP 98 20 2830

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP 0 781 064 A (NOKIA MOBILE PHONES LTD.) 25 juin 1997 <br> * colonne 9, ligne 8 - colonne 10, ligne 47 * <br>--- | 1,2,4,5, 7 | H04Q7/32 |
| A | WO 95 07010 A (KONINKLIJKE PTT NEDERLAND N.V.) 9 mars 1995 <br> * page 3, ligne 25 - page 7, ligne 11 * <br> * page 8, ligne 5 - page 11, ligne 27 * <br>--- | 1,3,4,7 | |
| A | US 5 613 213 A (NADDELL MARC C ET AL) 18 mars 1997 <br> * colonne 3, ligne 59 - colonne 5, ligne 15 * <br>--- | 1 | |
| A | GB 2 284 964 A (NEC CORPORATION) 21 juin 1995 <br> * page 6, ligne 18 - page 17, ligne 2 * <br>----- | 1 | |
| | | | **DOMAINES TECHNIQUES RECHERCHES (Int.Cl.6)** <br> H04Q |

Le présent rapport a été établi pour toutes les revendications

| Lieu de la recherche | Date d'achèvement de la recherche | Examinateur |
|---|---|---|
| LA HAYE | 5 octobre 1998 | Behringer, L.V. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
 
& : membre de la même famille, document correspondant